# EUROPEAN PATENT APPLICATION

(11) **EP 4 772 904 A1**
(43) Date of publication of application: **08.07.2026**
(21) Application number: 26150254.6
(22) Date of filing: 05.01.2026
(51) Int. Cl.: G01S 7/481, G01S 17/931

(54) **LIDAR AND AUTONOMOUS DRIVING DEVICE**

(30) Priority: 07.01.2025 CN 202510031046
(71) Applicant: Suteng Innovation Technology Co., Ltd, Shenzhen City Guangdong 518000 (CN)
(72) Inventor: LI, Deguo, Shenzhen City (CN); ZHAO, Xin, Shenzhen City (CN); WANG, Yifei, Shenzhen City (CN); WANG, Chencong, Shenzhen City (CN)
(74) Representative: Ran, Handong

(57) **Abstract**

A LiDAR and an autonomous driving device are provided. The LiDAR includes a transceiver module and a rotating mirror. The transceiver module includes a transmitting unit, a receiving unit, a first housing, a second housing, and a plane mirror. The first housing includes a receiving cylinder and a transmitting cylinder. The second housing includes a first sub-housing and a second sub-housing. The transmitting cylinder and the first sub-housing form a transmitting channel, and the receiving cylinder and the second sub-housing form a receiving channel. The first sub-housing includes a first opening. The second sub-housing includes a second opening and a first boss. The plane mirror is fixed to the first opening, and the first boss extends from a first end of the second opening to a second end of the second opening.

## Description

### TECHNICAL FIELD

The present application relates to the field of LiDAR technology, and more specifically, to a LiDAR and an autonomous driving device.

### BACKGROUND

As a high-precision detection instrument, LiDAR has been widely applied to fields such as robotics, autonomous driving, and industrial surveying and mapping. Its working principle is that a scanning light beam is emitted by a transmitting unit towards a detection area, and a target object located in the detection area reflects the scanning light beam to form an echo light beam. A receiving unit receives the echo light beam to obtain an echo signal, and a processor calculates parameters such as the distance, reflectivity, or velocity of the target object based on the echo signal.

The surfaces of internal structural components of a LiDAR or the surfaces of optical lenses usually have a certain reflectivity, and part of the light beam undergoes reflection or scattering on the surfaces of the aforementioned components to form stray light. Among them, stray light that enters the transmitting channel (the transmission channel of the scanning light beam) or the receiving channel (the transmission channel of the echo light beam) will affect the signal quality of the echo signal, thereby affecting the detection accuracy of the LiDAR.

### SUMMARY

The LiDAR and autonomous driving device provided by the present invention aim at solving at least one defect of existing LiDARs applicable to autonomous driving devices.

In a first aspect, the present invention provides a LiDAR. The LiDAR comprises a transceiver module and a rotating mirror, wherein the transceiver module comprises a transmitting unit, a receiving unit, a first housing, a second housing, and a plane mirror; the first housing comprises a receiving cylinder and a transmitting cylinder, the second housing comprises a first sub-housing and a second sub-housing, wherein the transmitting cylinder and the first sub-housing form a transmitting channel, and the receiving cylinder and the second sub-housing form a receiving channel; the first sub-housing comprises a first opening, the second sub-housing comprises a second opening and a first boss, wherein the plane mirror is fixed to the first opening, and the first boss extends from a first end of the second opening to a second end of the second opening.

In some embodiments, the plane mirror comprises a transparent region and a reflective region, wherein a scanning light beam emitted by the transmitting unit is transmitted through the transmitting channel, passes through the transparent region, and is directed to the rotating mirror; an echo light beam corresponding to the scanning light beam is reflected by the rotating mirror, directed to the reflective region, reflected by the reflective region, transmitted through the receiving channel, and reaches the receiving unit. By using the plane mirror as a beam splitting element to achieve approximately coaxial propagation of the scanning light beam and the echo light beam, the optomechanical structure of the system can be simplified, while facilitating centralized processing of stray light.

In some embodiments, an edge of the second opening and an edge of the first boss enclose to form a first light inlet; the echo light beam enters the receiving channel through the first light inlet after being reflected by the reflective region. The first light inlet is configured to transmit the echo light beam, and the first boss is configured to block the propagation path of stray light at the second opening. Suppression of stray light is achieved without blocking the normal propagation of the echo light beam, which is conducive to improving the detection accuracy of the LiDAR.

In some embodiments, a side of the plane mirror facing the rotating mirror comprises a first surface, an opposite side of the plane mirror away from the rotating mirror comprises a second surface, and the first surface is parallel to the second surface; the transparent region comprises a first transparent region and a second transparent region, the first surface comprises the first transparent region and the reflective region, the second surface comprises the second transparent region and an anti-reflection region; the scanning light beam sequentially passes through the second transparent region and the first transparent region, and is then directed to the rotating mirror.

In some embodiments, a light-absorbing texture is provided on an inner wall of the first sub-housing facing the second surface. The anti-reflection region and the light-absorbing texture are configured to suppress stray light in the transmitting channel, so as to prevent stray light from passing through the transparent region into the receiving channel and affecting the detection accuracy of the LiDAR.

In some embodiments, the anti-reflection region is coated with an anti-reflection film; or the anti-reflection region is treated with ink coating.

In some embodiments, the second sub-housing further comprises a light-absorbing step; the light-absorbing step is located on a side of the second sub-housing close to the rotating mirror, and the light-absorbing step comprises an arc-shaped light-absorbing surface inclined in a direction away from the rotating mirror.

In some embodiments, the transceiver module further comprises a first transmitting lens, a second transmitting lens, and a receiving lens; the first transmitting lens is fixed within the transmitting cylinder, the receiving lens is fixed within the receiving cylinder, and the second transmitting lens is fixed within the first sub-housing; an optical axis of the first transmitting lens is parallel to an optical axis of the receiving lens, and an optical axis of the second transmitting lens is perpendicular to the optical axis of the receiving lens.

In some embodiments, a projection of the first boss in a plane perpendicular to the optical axis of the receiving lens is a first projection, a projection of the transparent region in the plane perpendicular to the optical axis of the receiving lens is a second projection, wherein the first projection and the second projection at least partially overlap.

In a second aspect, the present invention provides an autonomous driving device. The autonomous driving device comprises a vehicle body and the LiDAR described above.

The LiDAR provided in the embodiments of the present invention comprises a transceiver module and a rotating mirror; the transceiver module comprises a transmitting unit, a receiving unit, a first housing, a second housing, and a plane mirror. The first housing comprises a receiving cylinder and a transmitting cylinder, the second housing comprises a first sub-housing and a second sub-housing; the transmitting cylinder and the first sub-housing form a transmitting channel, the receiving cylinder and the second sub-housing form a receiving channel, and the plane mirror is fixed to the first sub-housing. By centrally disposing light-absorbing structures such as the light-absorbing texture, light-absorbing surface, and boss on the second housing, the propagation path of stray light is altered or energy dissipation of stray light at the light-absorbing structures is increased, thereby achieving suppression of stray light. While meeting the requirement for suppressing stray light, the detection accuracy of the LiDAR is improved. Furthermore, this centralized processing of stray light can also improve the integration level of the LiDAR, which is conducive to miniaturization of the LiDAR.

### BRIEF DESCRIPTION OF DRAWINGS

FIG. 1 is a structural schematic diagram of a LiDAR provided in an embodiment of the present application;
FIG. 2 is a structural schematic diagram of a LiDAR provided in an embodiment of the present application;
FIG. 3 is a structural schematic diagram of a LiDAR provided in an embodiment of the present application;
FIG. 4 is a perspective schematic diagram of a transceiver module and a rotating mirror provided in an embodiment of the present application;
FIG. 5 is a structural schematic diagram of a transceiver module and a rotating mirror provided in an embodiment of the present application;
FIG. 6 is a cross-sectional view of a transceiver module and a rotating mirror provided in an embodiment of the present application;
FIG. 7 is a perspective schematic diagram of a plane mirror provided in an embodiment of the present application;
FIG. 8 is a structural schematic diagram of a second housing provided in an embodiment of the present application;
FIG. 9 is a structural schematic diagram of a top cover provided in an embodiment of the present application.

Reference: 100, LiDAR; 11, transmitting unit; 12, receiving unit; 13, first housing; 131, receiving cylinder; 1311, second light inlet; 1312, third light inlet; 132, transmitting cylinder; 1321, first light outlet; 14, second housing; 141, first sub-housing; 142, second sub-housing; 1411, fourth light inlet; 15, plane mirror; 152, reflective region; 1503, anti-reflection region; 1511, first transparent region; 1512, second transparent region; 16, first transmitting lens; 17, second transmitting lens; 18, receiving lens; 1421, second opening; 1422, first boss; 1423, light-absorbing step; 1424, light-absorbing texture; 2, rotating mirror; 201, reflective surface; 3, top cover; 301, light-blocking boss; 3011, second light-absorbing surface; 4, bottom cover; 5, window sheet; 200, scanning light beam; 300, echo light beam.

### DETAILED DESCRIPTION

The surfaces of internal structural components of a LiDAR or optical lenses usually have a certain reflectivity, such as components like a transmitting lens, a receiving lens, a receiving cylinder, a transmitting cylinder, and a LiDAR housing. Part of the light undergoes reflection or scattering on the surfaces of the aforementioned components to form stray light. Among them, stray light that enters the transmitting channel (the transmission channel of the scanning light beam) or the receiving channel (the transmission channel of the echo light beam) will affect the signal quality of the echo signal, thereby affecting the detection accuracy of the LiDAR. To reduce the interference of stray light on the echo signal, in related art, light-absorbing structures such as bosses, light-absorbing surfaces, and diaphragms are processed on the surfaces of different components respectively to restrict the transmission path of stray light. However, this decentralized stray light suppression scheme increases the processing difficulty of each structural component and the structural complexity of the entire machine, and also increases the cost of the entire machine.

To solve the above problems, in the embodiments of the present application, by centrally arranging each light-absorbing structure on some components, only the processing accuracy of the light-absorbing structure of a single component needs to be controlled during processing. While achieving stray light suppression, the processing efficiency of the LiDAR is improved, the structural complexity of the entire machine is reduced, and it is conducive to the miniaturization of the LiDAR and cost reduction.

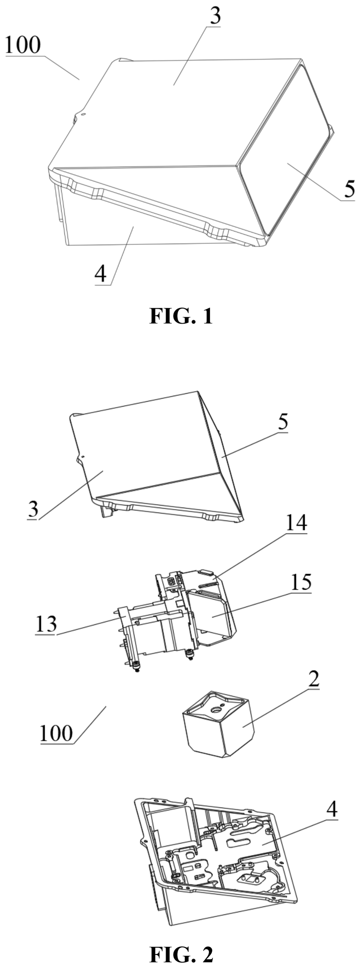

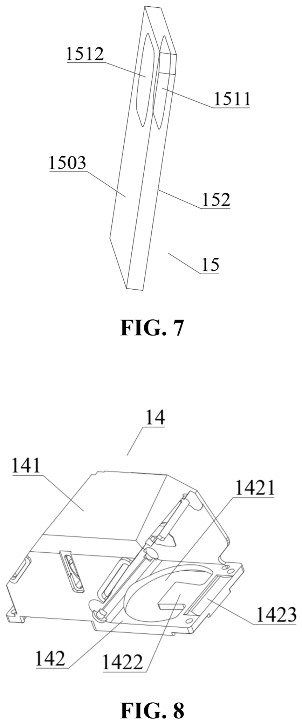

In an embodiment, refer to FIGS. 1 to 9. An embodiment of the present application discloses a LiDAR. The LiDAR 100 includes a housing and a window sheet 5 fixedly mounted on the housing. The housing includes a top cover 3 and a bottom cover 4. The top cover 3 and the bottom cover 4 jointly enclose to form an internal cavity of the LiDAR 100, which is used to accommodate an internal transceiver module and a scanning element. The window sheet 5 is used to transmit the scanning light beam and the echo light beam, and cooperates with the housing to separate the internal cavity of the LiDAR 100 from the external environment, preventing rain, fog, dust, etc. from entering the internal cavity and affecting the normal operation of the LiDAR 100.

In an embodiment, in combination with FIGS. 1 and 2, the LiDAR 100 includes a housing, a transceiver module, a scanning element, and a window sheet 5. The scanning element is a galvanometer mirror, an oscillating mirror, or a rotating mirror. The transceiver module includes a transmitting unit 11, a receiving unit 12, a first housing 13, a second housing 14, and a plane mirror 15. The plane mirror 15 includes a reflective region and a transparent region.

In an embodiment, the scanning element is a rotating mirror 2. The LiDAR 100 further includes a motor. The rotating mirror 2 includes a plurality of reflective surfaces 201. The reflective surfaces are used to deflect the propagation direction of the scanning light beam and the propagation direction of the echo light beam. Wherein, the rotating mirror 2 rotates around a rotation axis under the drive of the motor to control the deflection directions of the scanning light beam and the echo light beam.

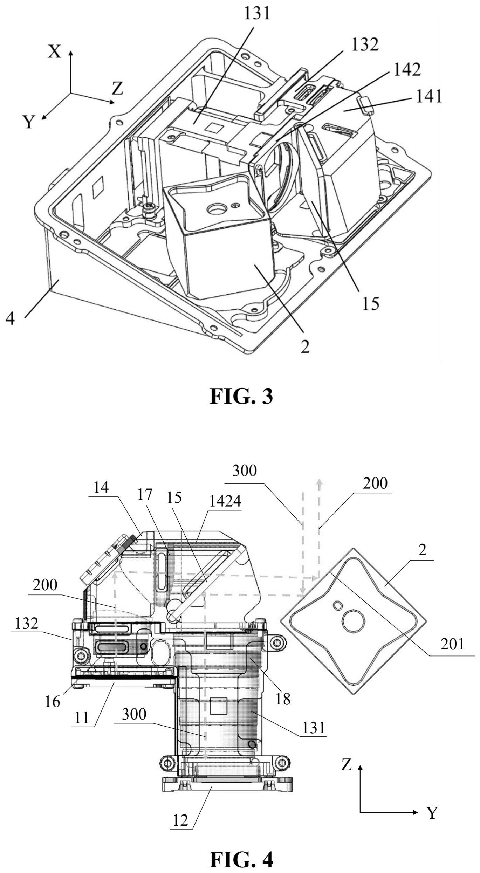

In an embodiment, in combination with FIGS. 2 and 3, in the internal cavity of the LiDAR, the transceiver module and the rotating mirror 2 are arranged sequentially along the Y-axis direction. The first housing 13, the second housing 14, and the window sheet 5 are arranged sequentially along the Z-axis direction. The first housing 13 includes a receiving cylinder 131 and a transmitting cylinder 132. The receiving cylinder 131 is located between the rotating mirror 2 and the transmitting cylinder 132. The second housing 14 includes a first sub-housing 141 and a second sub-housing 142. The first sub-housing 141 includes a first opening, and the plane mirror 15 is fixedly mounted on the first opening.

In an embodiment, the receiving cylinder 131 and the transmitting cylinder 132 are integrally formed components or separately connected components. Separate connection methods include connection methods such as screws, snap-fits, welding, or lapping. The first sub-housing 141 and the second sub-housing 142 are integrally formed components or separately connected components. Separate connection methods include connection methods such as screws, snap-fits, welding, or lapping.

In an embodiment, in combination with FIGS. 3 to 6, the first sub-housing 141 and the second sub-housing 142 are integrally formed components. The transmitting cylinder 132 is fixedly connected to the first sub-housing 141 to form a transmitting channel. The receiving cylinder 131 is fixedly connected to the second sub-housing 142 to form a receiving channel. A scanning light beam emitted by the transmitting unit 11 is transmitted through the transmitting channel, passes through the transparent region, and is directed to the rotating mirror 2. After being reflected by one of the reflective surfaces 201 of the rotating mirror 2, it passes through the window sheet 5 and is directed to a detection area. A target object located in the detection area reflects the scanning light beam to form an echo light beam. The echo light beam passes through the window sheet 5, reaches the surface of the rotating mirror 2, is reflected by one of the reflective surfaces 201 of the rotating mirror 2 toward the reflective region 152, and after being reflected by the reflective region 152, is transmitted through the receiving channel to reach the receiving unit 12. By using the plane mirror 15 including the transparent region and the reflective region as a beam splitting element to achieve approximately coaxial propagation of the scanning light beam and the echo light beam, the optomechanical structure of the system can be simplified, the volume of the transceiver module can be compressed, which is conducive to centralized processing of stray light and miniaturization of the LiDAR.

In an embodiment, a main control circuit board is fixedly installed in the LiDAR 100. The main control circuit board includes a processor. The processor is used to control the period and emission time of the scanning light beam emitted by the transmitting unit 11. The receiving unit 12 is used to obtain an echo signal based on the received echo light beam and transmit the echo signal to the processor inside the LiDAR 100. The processor is further used to measure the time interval between the emission time of the scanning light beam and the reception time of the echo light beam based on the echo signal, and calculate the distance between the LiDAR 100 and the target object in combination with the speed of light. Based on the scanning element deflecting the scanning light beam to different angles and receiving the echo light beams of target objects at different positions in the detection area, a three-dimensional point cloud map of the detection area is constructed.

In an embodiment, in combination with FIGS. 3 to 6, the transmitting cylinder 132 includes a first light outlet 1321. The receiving cylinder 131 includes a second light inlet 1311 and a third light inlet 1312. The first sub-housing 141 further includes a fourth light inlet 1411. The second sub-housing 142 includes a second opening 1421. A scanning light beam 200 emitted by the transmitting unit 11 sequentially passes through the first light outlet 1321 and the fourth light inlet 1411 to enter the first sub-housing 141. After being transmitted in the first sub-housing 141, it passes through the transparent region of the plane mirror 15 and is directed to the rotating mirror 2. After being reflected by one of the reflective surfaces 201 of the rotating mirror 2, it passes through the window sheet 5 and is directed to the detection area. A target object in the detection area reflects the scanning light beam 200 to form an echo light beam 300. The echo light beam 300 passes through the window sheet 5, is directed to the rotating mirror 2, and after being reflected by one of the reflective surfaces 201 of the rotating mirror 2, reaches the reflective region of the plane mirror 15. After being reflected by the reflective region of the plane mirror 15, it sequentially passes through the second opening 1421, the second light inlet 1311, and the third light inlet 1312 to reach the photosensitive surface of the receiving unit 12.

In an embodiment, in combination with FIGS. 3 to 6, the transceiver module further includes at least one transmitting lens and at least one receiving lens. The at least one transmitting lens includes a first transmitting lens 16 and a second transmitting lens 17. The at least one receiving lens includes a receiving lens 18. The first transmitting lens 16 is fixed within the transmitting cylinder 132. The receiving lens 18 is fixed within the receiving cylinder 131. The second transmitting lens 17 is fixed within the first sub-housing 141. The optical axis of the first transmitting lens 16 and the optical axis of the receiving lens 18 are both parallel to the Z-axis. The optical axis of the second transmitting lens 17 is parallel to the Y-axis. That is, the optical axis of the first transmitting lens 16 is parallel to the optical axis of the receiving lens 18, and the optical axis of the second transmitting lens 17 is perpendicular to the optical axis of the receiving lens 18. Both the first transmitting lens 16 and the second transmitting lens 17 are disposed on the propagation path of the scanning light beam 200, and are used for one or more combinations of optical processes such as collimation, focusing, and beam expansion of the scanning light beam 200. The receiving lens 18 is disposed on the propagation path of the echo light beam 300, and is used for one or more combinations of optical processes such as collimation, focusing, and beam expansion of the echo light beam 300.

During the transmission of the scanning light beam 200 within the first sub-housing 141, a portion of the light beam may be directed toward the inner wall of the first sub-housing 141 adjacent to the plane mirror 15. Additionally, a portion of the scanning light beam or echo light beam reflected by other structural components inside the LiDAR 100 (such as the rotating mirror 2, the inner wall of the housing, and the receiving cylinder 131) may also pass through the transparent region and be directed toward the inner wall of the first sub-housing 141 adjacent to the plane mirror 15. The light beams from the above portions collectively form a first type of stray light at the inner wall of the first sub-housing 141 adjacent to the plane mirror 15. The first type of stray light will again pass through the transparent region of the plane mirror 15 into the propagation path of the echo light beam 300, be received by the receiving unit 12, and thereby affect the accuracy of the echo signal.

Due to the rotation of the rotating mirror 2, scattered light from large-angle internal structural components of the LiDAR may be deflected by the rotating mirror 2 to reach the surface of the second sub-housing 142 adjacent to the rotating mirror 2, and reflect on this surface to form a second type of stray light. The second type of stray light is reflected from the reflective region of the plane mirror 15 into the propagation path of the echo light beam 300 and received by the receiving unit 12. Furthermore, both the rotating mirror 2 and the plane mirror 15 are close to the window sheet 5. A portion of the light beam reflected or scattered from the gap between the rotating mirror 2 and the window sheet 5 onto the inner wall of the top cover 3 forms a third type of stray light. This third type of stray light enters the propagation path of the echo light beam 300 after undergoing reflection or scattering on the surfaces of various components inside the LiDAR. The above three types of stray light are merely exemplary descriptions.

To suppress the influence of stray light on the detection accuracy of the LiDAR, in an embodiment, in combination with FIGS. 3 to 6, the second sub-housing 142 further includes a first boss 1422. The first boss 1422 extends along the Y-axis direction from a first end of the second opening 1421 (the end of the second opening 1421 adjacent to the rotating mirror 2) to a second end of the second opening 1421 (the end of the second opening 1421 away from the rotating mirror 2). Wherein, an edge of the second opening 1421 and an edge of the first boss 1422 jointly enclose to form a first light inlet, and the first light inlet is in communication with the second light inlet 1311. After being reflected by the reflective region of the plane mirror 15, the echo light beam 300 sequentially passes through the first light inlet and the second light inlet 1311 to enter the receiving cylinder 131. That is, the first boss 1422 is configured to block the propagation path of stray light at the second opening 1421. Suppression of stray light incident on the second opening 1421 is achieved without blocking the normal propagation of the echo light beam, which is conducive to improving the detection accuracy of the LiDAR.

In an embodiment, the contour and size of the first boss 1422 are designed based on optical simulation results of the light spot of stray light incident on the second opening 1421, wherein the optical simulation results include the shape and size of the light spot of stray light incident on the second opening 1421. Such a profile design can better achieve effective suppression of various types of stray light without blocking the propagation path of the echo light beam 300, thereby preventing various types of stray light from entering the receiving channel and affecting the detection accuracy of the LiDAR.

In an embodiment, in combination with FIGS. 3, 5, and 8, the second sub-housing 142 further includes a light-absorbing step 1423. The light-absorbing step 1423 is located at an end of the second opening 1421 adjacent to the rotating mirror 2 (i.e., on a side of the second sub-housing 142 close to the rotating mirror 2) and is adjacently disposed with the first boss 1422. The first boss 1422 and the light-absorbing step 1423 are sequentially arranged along the Y-axis direction. The light-absorbing step 1423 further includes a first light-absorbing surface inclined in a direction away from the rotating mirror 2. The first light-absorbing surface is configured to reflect stray light, causing stray light (such as the second type of stray light) propagating to the light-absorbing step 1423 to deflect in a direction away from the first light inlet, thereby preventing the second type of stray light from entering the receiving channel through the first light inlet and affecting the detection accuracy of the LiDAR. In some embodiments, the first light-absorbing surface of the light-absorbing step 1423 is an arc-shaped light-absorbing surface or a planar surface.

In an embodiment, the transparent region is located on a side of the plane mirror 15 close to the window sheet 5 (i.e., a side of the plane mirror 15 away from the second opening 1421). A projection of the first boss 1422 in a plane perpendicular to the optical axis of the receiving lens 18 is a first projection, and a projection of the transparent region in the plane perpendicular to the optical axis of the receiving lens 18 is a second projection, wherein the first projection and the second projection at least partially overlap. The transparent region is correspondingly disposed with the first boss 1422 to ensure suppression of stray light transmitted through the transparent region by the first boss 1422.

In an embodiment, in combination with FIGS. 1 to 7, a side of the plane mirror 15 facing the rotating mirror 2 includes a first surface (not shown in the drawings), and an opposite side of the plane mirror 15 away from the rotating mirror 2 includes a second surface (not shown in the drawings). The first surface is parallel to the second surface. The normal line of the first surface forms a 45-degree angle with the Y-axis direction, and the normal line of the first surface forms a 45-degree angle with the Z-axis direction, and the first surface is parallel to the X-axis direction. The transparent region includes a first transparent region 1511 and a second transparent region 1512. The first surface includes the first transparent region 1511 and the reflective region 152, and the second surface includes the second transparent region 1512 and an anti-reflection region 1503. The scanning light beam 200 sequentially passes through the second transparent region 1512 and the first transparent region 1511, and is then directed to the rotating mirror 2.

In an embodiment, the reflective region 152 is coated with a reflective film, which includes an aluminum-coated reflective film, a silver-coated reflective film, or the like. Both the first transparent region 1511 and the second transparent region 1512 are provided with an anti-reflection film to enhance the transmittance for the scanning light beam 200, reduce the energy loss of the scanning light beam 200 when passing through the transparent region, and improve the detection effect and energy utilization rate. The reflective region 152 is provided with a specular reflective film to enhance the reflectivity for the echo light beam 300, reduce the loss of the echo light beam 300 at the reflective region 152, and improve the detection effect.

In some embodiments, the anti-reflection film is a combination of one or more layers of thin films with specific refractive indices, which can reduce the energy loss when light passes through, thereby increasing the transmittance of the transparent region of the plane mirror 15 for the scanning light beam 200.

In an embodiment, the anti-reflection region 1503 is coated with an anti-reflection film. The anti-reflection film is a combination of one or more materials with different refractive indices, such as silicon dioxide, aluminum oxide, magnesium fluoride, silicon nitride, or the like. In another embodiment, the anti-reflection region 1503 is treated with ink coating. After ink coating treatment, the anti-reflection region 1503 can increase the absorption rate for stray light, thereby achieving suppression of stray light.

By providing the anti-reflection region 1503 on the second surface of the plane mirror 15, the reflection intensity of the scanning light beam 200 on surfaces of the second surface of the plane mirror 15 other than the second transparent region 1512 is effectively reduced, thereby decreasing the intensity of stray light inside the first sub-housing 141.

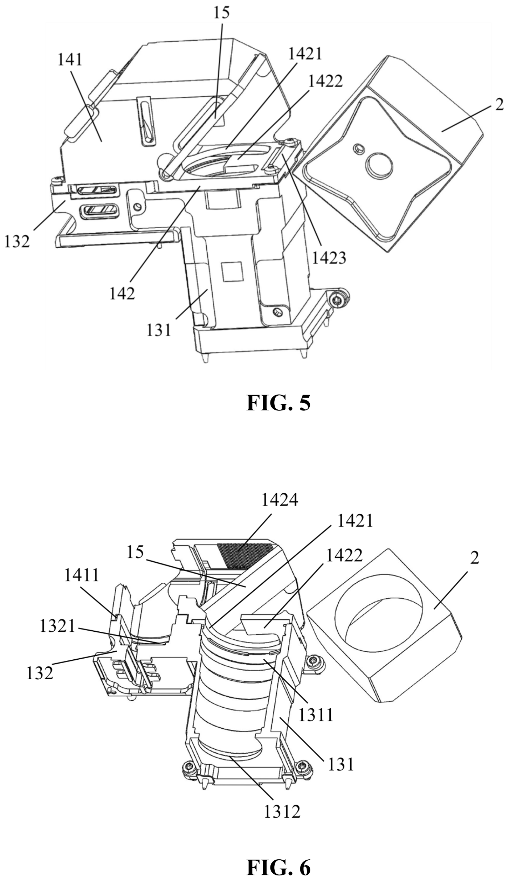

In an embodiment, in combination with FIGS. 4 and 6, a light-absorbing texture 1424 is provided on an inner wall of the first sub-housing 141 facing the second surface. The light-absorbing texture 1424 includes a plurality of bosses and a plurality of grooves, with one groove located between two bosses. When the first type of stray light propagates to the light-absorbing texture 1424, multiple reflections occur on the concave-convex structure formed by the plurality of bosses and grooves. During the multiple reflections, the energy of the stray light continuously attenuates, thereby achieving suppression of stray light incident on the area where this light-absorbing structure is located.

In the above embodiments, by centrally arranging light-absorbing structures such as the first boss 1422, the light-absorbing step 1423, and the light-absorbing texture 1424 on the second housing 14, the propagation path of stray light is altered or the energy dissipation of stray light at the light-absorbing structures is increased, thereby achieving suppression of stray light. While meeting the requirement for suppressing stray light, the detection accuracy of the LiDAR 100 is improved. This centralized processing of stray light can also enhance the integration level of the LiDAR 100, which is conducive to the miniaturization of the LiDAR.

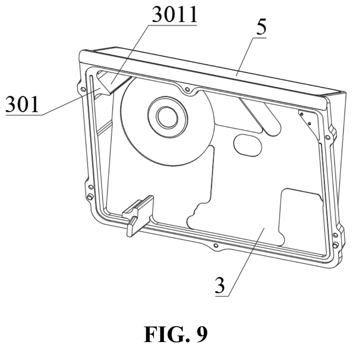

In an embodiment, to suppress the influence of the third type of stray light, as shown in FIG. 9, a light-blocking boss 301 is further provided on the top cover 3. The light-blocking boss 301 has a second light-absorbing surface 3011 with a predetermined inclination angle. The second light-absorbing surface 3011 is parallel to the X-axis direction and is inclined in a direction away from the window sheet 5. The second light-absorbing surface 3011 is configured to deflect the third type of stray light toward the window sheet 5, allowing the third type of stray light to pass through the window sheet 5 and preventing it from entering the propagation path of the echo light beam 300, thereby further improving the detection accuracy of the LiDAR 100.

In some embodiments, the transmitting unit 11 includes an area array transmitting array or a linear array transmitting array composed of a plurality of lasers. The lasers are one or more combinations of laser diodes, fiber lasers, Vertical Cavity Surface Emitting Lasers (VCSELs), or Edge Emitting Lasers (EELs). The receiving unit 12 includes an area array receiving array or a linear array receiving array composed of a plurality of photosensitive elements. The photosensitive elements are Single Photon Avalanche Diodes (SPADs) or Silicon Photomultipliers (SiPMs).

In an embodiment, the present application discloses an autonomous driving device. The autonomous driving device includes a central controller, a vehicle body, and the LiDAR 100 as described in the above embodiments, which is mounted on the vehicle body. The central controller is configured to perform autonomous driving tasks such as path planning, target recognition, and obstacle avoidance based on the three-dimensional point cloud map obtained by the LiDAR 100. In some embodiments, the processor or central controller may be a Field-Programmable Gate Array (FPGA), System on Chip (SoC), Central Processing Unit (CPU), Network Processor (NP), digital signal processing circuit, Micro Controller Unit (MCU) for micro pose correction, Application-Specific Integrated Circuit (ASIC), or any combination thereof, for implementing relevant functions.

The above content is a further detailed description of the present invention in combination with specific/preferred embodiments, and it should not be considered that the specific implementation of the present invention is limited to these descriptions. For those of ordinary skill in the art, various modifications and improvements can be made without departing from the concept of the present invention, and these all fall within the protection scope of the present invention.

## Claims

1. A LiDAR, comprising a transceiver module and a rotating mirror, wherein the transceiver module comprises a transmitting unit, a receiving unit, a first housing, a second housing, and a plane mirror;
the first housing comprises a receiving cylinder and a transmitting cylinder, the second housing comprises a first sub-housing and a second sub-housing, wherein the transmitting cylinder and the first sub-housing form a transmitting channel, and the receiving cylinder and the second sub-housing form a receiving channel;
the first sub-housing comprises a first opening, the second sub-housing comprises a second opening and a first boss, wherein the plane mirror is fixed to the first opening, and the first boss extends from a first end of the second opening to a second end of the second opening.

2. The LiDAR according to claim 1, wherein the plane mirror comprises a transparent region and a reflective region, wherein a scanning light beam emitted by the transmitting unit is transmitted through the transmitting channel, passes through the transparent region, and is directed to the rotating mirror;
an echo light beam corresponding to the scanning light beam is reflected by the rotating mirror, directed to the reflective region, reflected by the reflective region, transmitted through the receiving channel, and reaches the receiving unit.

3. The LiDAR according to claim 2, wherein an edge of the second opening and an edge of the first boss enclose to form a first light inlet;
the echo light beam enters the receiving channel through the first light inlet after being reflected by the reflective region.

4. The LiDAR according to claim 2, wherein a side of the plane mirror facing the rotating mirror comprises a first surface, an opposite side of the plane mirror away from the rotating mirror comprises a second surface, and the first surface is parallel to the second surface;
the transparent region comprises a first transparent region and a second transparent region, the first surface comprises the first transparent region and the reflective region, the second surface comprises the second transparent region and an anti-reflection region;
the scanning light beam sequentially passes through the second transparent region and the first transparent region, and is then directed to the rotating mirror.

5. The LiDAR according to claim 4, wherein a light-absorbing texture is provided on an inner wall of the first sub-housing facing the second surface.

6. The LiDAR according to claim 4, wherein the anti-reflection region is coated with an anti-reflection film; or
the anti-reflection region is treated with ink coating.

7. The LiDAR according to claim 1, wherein the second sub-housing further comprises a light-absorbing step;
the light-absorbing step is located on a side of the second sub-housing close to the rotating mirror, and the light-absorbing step comprises an arc-shaped light-absorbing surface inclined in a direction away from the rotating mirror.

8. The LiDAR according to claim 2, wherein the transceiver module further comprises a first transmitting lens, a second transmitting lens, and a receiving lens;
the first transmitting lens is fixed within the transmitting cylinder, the receiving lens is fixed within the receiving cylinder, and the second transmitting lens is fixed within the first sub-housing;
an optical axis of the first transmitting lens is parallel to an optical axis of the receiving lens, and an optical axis of the second transmitting lens is perpendicular to the optical axis of the receiving lens.

9. The LiDAR according to claim 8, wherein a projection of the first boss in a plane perpendicular to the optical axis of the receiving lens is a first projection, a projection of the transparent region in the plane perpendicular to the optical axis of the receiving lens is a second projection, wherein the first projection and the second projection at least partially overlap.

10. An autonomous driving device, comprising a vehicle body and the LiDAR according to any one of claims 1 to 9.
